# EUROPÄISCHE PATENTANMELDUNG

(11) **EP 3 599 038 A1**
(43) Veröffentlichungstag der Anmeldung: **29.01.2020**
(21) Anmeldenummer: 18185390.4
(22) Anmeldetag: 25.07.2018
(51) Int. Cl.: B21B 38/04

(54) **VERFAHREN UND VORRICHTUNG ZUR ERMITTLUNG DER SEITLICHEN BANDKONTUR EINES LAUFENDEN METALLBANDES**

(71) Anmelder: Primetals Technologies Austria GmbH, 4031 Linz (AT)
(72) Erfinder: Moser, Friedrich, 4202 Hellmonsoedt (AT)
(74) Vertreter: Metals@Linz

(57) **Zusammenfassung**

Verfahren zur Ermittlung der seitlichen Bandkontur eines über eine Metallband-Fördervorrichtung eines Walzwerkes laufenden Metallbandes (1), wobei zu einem Startzeitpunkt ein Fühlelement (3) in Kontakt mit einer Seitenkante (4) des Metallbandes (1) gebracht wird, und mittels des Fühlelementes (3) zur Bestimmung der seitlichen Bandkontur geeignete Messdaten erhoben werden, während der Abschnitt des Metallbandes (1) an dem Fühlelement (3) vorbei läuft. Auf Basis der Messdaten beziehungsweise der ermittelten Bandkontur kann Korrektur des Bandlaufes durch Korrekturmaßnahmen an einem oder mehreren Walzgerüsten und/oder an einer oder an mehreren Seitenführungen des Walzwerkes vorgenommen werden. Eine Vorrichtung zur Ermittlung der seitlichen Bandkontur eines über eine Metallband-Fördervorrichtung eines Walzwerkes laufenden Metallbandes (1) hat ein Fühlelement (3) zur Erhebung von zur Bestimmung der seitlichen Bandkontur geeigneten Messdaten, das in Kontakt mit einer Seitenkante (4) des laufenden Metallbandes (1) gebracht werden kann.

## Beschreibung

### Gebiet der Technik

Die Erfindung betrifft ein Verfahren und eine Vorrichtung zur Ermittlung der seitlichen Bandkontur eines über eine Metallband-Fördervorrichtung eines Walzwerkes laufenden Metallbandes sowie ein Verfahren zur Korrektur des Bandlaufes.

### Stand der Technik

Beim Auswalzen in einem Walzwerk wird die Dicke von durch Walzgerüste laufenden Metallbändern schrittweise reduziert, wobei die Dickenreduktion auch zu Veränderung der Breite führt. Über die Länge des Metallbandes kann die Orientierung der Seitenkanten relativ zur Längsachse des Metallbandes - im Rahmen dieser Anmeldung auch seitliche Bandkontur genannt - verschieden sein. Beispielsweise kann es zu sogenannter Säbelbildung kommen, wobei eine Seitenkante in Richtung Längsachse wandert, während die andere Seitenkante in Richtung von der Längsachse weg wandert. Bevorzugt ist eine weitgehende parallele Ausrichtung der Seitenkanten zur Längsachse. Es wird versucht, Abweichungen von diesem gewünschten Idealzustand frühzeitig zu erkennen, um Gegenmaßnahmen einleiten zu können. Beispielsweise wird die seitliche Bandkontur mittels Kameras überwacht, und gegebenenfalls durch Veränderungen der Stellung der Walzen in den Walzgerüsten einer ungünstigen Entwicklung gegengesteuert. Die dazu notwendige Ausstattung mit Kameras benötigt jedoch Platz, erhöht die Komplexität des Walzwerks, ist teuer und wartungsintensiv, und ist unter den für optische Erkennung ungünstigen Umweltbedingungen fehleranfällig.

### Zusammenfassung der Erfindung

### Technische Aufgabe

Es soll ein Verfahren und eine Vorrichtung vorgestellt werden, die eine im Vergleich zu optischer Erkennung weniger komplizierte und fehleranfällige Ermittlung der seitlichen Bandkontur eines in einem Walzwerk laufenden Metallbandes erlaubt.

### Technische Lösung

Diese Aufgabe wird gelöst durch ein Verfahren zur Ermittlung der seitlichen Bandkontur zumindest eines Abschnittes eines über eine Metallband-Fördervorrichtung eines Walzwerkes, bevorzugt Warmwalzwerkes, laufenden Metallbandes,
dadurch gekennzeichnet, dass

zu einem Startzeitpunkt zumindest ein Fühlelement in Kontakt mit einer Seitenkante des Metallbandes gebracht wird,
und mittels des Fühlelementes zur Bestimmung der seitlichen Bandkontur geeignete Messdaten erhoben werden, während der Abschnitt des Metallbandes an dem Fühlelement vorbei läuft.

Das Metallband läuft in dem Walzwerk über eine Metallband-Fördervorrichtung, beispielsweise einen Rollgang.

Die seitliche Bandkontur kann beispielsweise vor einem Walzgerüst, nach einem Walzgerüst, zwischen verschiedenen Walzgerüsten ermittelt werden.

Es kann die seitliche Bandkontur des gesamten Metallbandes ermittelt werden, oder eines Abschnittes des Metallbandes.

### Vorteilhafte Wirkungen der Erfindung

Statt Beobachtung mittels Kameras wie im Stand der Technik wird erfindungsgemäß Kontakt eines Fühlelementes mit einer Seitenkante des Metallbandes genutzt, um die Bandkontur zu bestimmen. Durch den direkten Kontakt und Messung direkt am Metallband kann eine Ermittlung der seitlichen Bandkontur genauer und bezüglich Umgebungsbedingungen weniger störanfällig erfolgen.

Es kann auch auf jeder der beiden Seitenkanten des Metallbandes zumindest ein Fühlelement in Kontakt gebracht werden. Es können an jeder der Seitenkanten auch mehrere Fühlelemente vorhanden sein.
Der Kontakt erfolgt zum Startzeitpunkt mit einer vorausgewählten Startkontaktkraft, mit der das Fühlelement, bevorzugt möglichst behutsam unter Vermeidung einer Beschädigung der Seitenkante, an die Seitenkante angedrückt wird.

Erfindungsgemäß wird ein Fühlelement zu einem Startzeitpunkt in Kontakt mit einer Seitenkante des laufenden Metallbandes gebracht. Startzeitpunkt bezieht sich dabei auf den Beginn des Verfahrens zur Ermittlung der seitlichen Bandkontur; das Verfahren beginnt mit Herstellung des Kontaktes zwischen Fühlelement und Seitenkante. Mittels des Fühlelementes werden, während das Metallband - beziehungsweise der zu vermessende Abschnitt des Metallbandes - an dem Fühlelement vorbei läuft, zu Bestimmung der seitlichen Bandkontur geeignete Messdaten erhoben. Das können beispielsweise Messdaten bezüglich eines Weges beziehungsweise Abstandes oder bezüglich einer Kraft sein. Wenn zum Herstellen des Kontakts - auch Anstellen genannt - beispielsweise ein Hydrauliksystem beziehungsweise -zylinder genutzt wird, können es auch Messdaten zu dem sich in dem Hydrauliksystem beziehungsweise -zylinder während des Metallbandlaufes ändernden Druck sein.
Die Messdaten können unter Aufrechterhaltung des Kontaktes gemessen werden, oder sich auf gegebenenfalls erfolgenden Wegfall des Kontaktes beziehen.

Auf Basis erhobener Messdaten wird in der Folge die seitliche Bandkontur ermittelt.

Nach einer bevorzugten Variante betreffen die Messdaten den Abstand des Fühlelementes von einer Referenz bei Kontakt mit der Seitenkante des Metallbandes. Es können beispielsweise Änderungen des Abstandes - also Wege - gemessen werden oder die Größe des Abstandes. Zum Beispiel wird zu einem Zeitpunkt, in dem Kontakt des Fühlelementes mit der Seitenkante des Metallbandes besteht, der Abstand des Fühlelementes von einer - grundsätzlich willkürlich vom Betreiber festlegbaren - Referenz bestimmt. Dabei kann der Abstand auch 0 betragen, wenn die Referenz entsprechend gewählt ist. Die Referenz kann beispielsweise ein Referenzpunkt beispielsweise im Walzwerk sein, oder eine Referenzposition eines Fühlelementes, das mehrere Positionen einnehmen kann.
Der Abstand des Fühlelementes von einer Referenz ist einfach messbar.

Nach einer bevorzugten Variante betreffen die Messdaten die vom Metallband auf das Fühlelement ausgeübte Kraft. Es können beispielsweise Änderungen der Kraft gemessen werden oder die Größe der Kraft. Die Kraft kann auch 0 sein, wenn beispielsweise aufgrund Säbelbildung Kontakt zwischen Seitenkante des Metallbandes und Fühlelement abreißt.
Die vom Metallband auf das Fühlelement ausgeübte Kraft ist einfach messbar.

Nach einer bevorzugten Variante werden nach dem Startzeitpunkt, während der Abschnitt des Metallbandes an dem Fühlelement vorbei läuft, Messdaten der vom Metallband auf das Fühlelement ausgeübten Kraft erhoben, wobei die zum Startzeitpunkt vom Fühlelement eingenommene Position aufrechterhalten wird, solange die vom Metallband auf das Fühlelement ausgeübten Kraft oberhalb 0 und unterhalb eines Grenzwertes bleibt. Der Grenzwert kann vom Betreiber des Verfahrens gewählt werden. Wird der Grenzwert überschritten, wird die Position so geändert, dass die Kraft abnimmt - dadurch wird Beschädigung der Seitenkante vermieden. Auf diese Weise kann einfach festgestellt werden, ob der Abschnitt einen Säbel aufweist. Da die Position des Fühlelementes sich im Vergleich zum Startzeitpunkt nicht ändert, kann eine Säbelbildung zu einer Erhöhung der Kraft führen, weil das Metallband aufgrund der Ausbuchtung stärker auf das Fühlelement drückt.
Messdaten der vom Metallband auf das Fühlelement ausgeübten Kraft werden erhoben. Die die zum Startzeitpunkt vom Fühlelement eingenommene Position wird aufrechterhalten, solange die vom Metallband auf das Fühlelement ausgeübten Kraft oberhalb 0 und unterhalb eines Grenzwertes bleibt. Die Aufrechterhaltung der zum Startzeitpunkt vom Fühlelement eingenommenen Position kann beispielsweise so erfolgen: das Fühlelement wird zur Kontaktherstellung zum Startzeitpunkt mit einem Hydraulikzylinder mit einer Startkontaktkraft an das Metallband angestellt, und dann wird der Hydraulikzylinder in dieser Position bezüglich Fluss von Hydraulikflüssigkeit zwischen seinen Kammern verriegelt. Um ein Überschreiten eines Grenzwertes der vom Metallband auf den Hydraulikzylinder ausgeübten Kraft zu vermeiden, kann ein entsprechend eingestelltes Ventil vorgesehen sein.
Wenn Säbelbildung zum Verlust des Kontaktes führt, geht die Kraft auf 0 zurück. Aufgrund des wegfallenden Widerstandes kann es dann sein, dass das Fühlelement seine Position etwas verändert.

Nach einer bevorzugten Variante erfolgt der Kontakt zum Startzeitpunkt mit einer vorausgewählten Startkontaktkraft, und wird nach dem Startzeitpunkt der Kontakt zwischen Seitenkante und Fühlelement mit Startkontaktkraft aufrechterhalten, während der Abschnitt des Metallbandes an dem Fühlelement vorbei läuft, und werden Messdaten von dazu notwendigen Änderungen des Abstandes zur Referenz erhoben. Auf diese Weise kann einfach festgestellt werden, ob der Abschnitt einen Säbel aufweist. Wenn ein Säbel vorliegt, muss das Fühlelement zur Aufrechterhaltung des Kontaktes seine zum Startzeitpunkt eingenommene Position verlassen um die Startkontaktkraft aufrechtzuerhalten.

Auf Basis der voranstehend diskutierten Messdaten wird die seitliche Bandkontur des Metallbandes beziehungsweise des Metallband-Abschnittes, an dem sie gemessen wurden, ermittelt. Beispielsweise kann sie auf einfache Weise unter Einbeziehung der Bandgeschwindigkeit und dem Zeitpunkt der Ermittlung der Messdaten aus den Messdaten errechnet werden. Beispielsweise zeigen die notwendigen Änderungen der Position des Fühlelementes zur Aufrechterhaltung des Kontakts mit Startkontaktkraft mit den entsprechenden Zeitpunktsinformationen, an welchen Stellen der Längserstreckung des vermessenen Metallbandes Einbuchtungen oder Ausbuchtungen von Säbeln vorhanden sind - somit kann die Bandkontur ermittelt werden.

Ein weiterer Gegenstand der Anmeldung ist ein Verfahren zur Korrektur des Bandlaufes eines über eine Metallband-Fördervorrichtung eines Walzwerkes, bevorzugt Warmwalzwerkes, laufenden Metallbandes, dadurch gekennzeichnet, dass auf Basis der nach einem erfindungsgemäßen Verfahren zur Ermittlung der seitlichen Bandkontur erhobenen Messdaten und/oder auf Basis der ermittelten seitlichen Bandkontur Korrekturmaßnahmen an einem oder mehreren Walzgerüsten und/oder an einer oder mehreren Seitenführungen des Walzwerkes vorgenommen werden.

Bevorzugt ist eine Regelung der Korrekturmaßnahmen an Walzgerüsten und/oder an Seitenführungen, die auf Basis der erfindungsgemäß erhobenen Messdaten und/oder der erfindungsgemäß ermittelten seitlichen Bandkontur erfolgt.

Ein Walzwerk umfasst unter anderem Walzgerüste, Metallband-Fördervorrichtungen und Seitenführungen für das Metallband. Auf Basis der erhobenen Messdaten und/oder der seitlichen Bandkontur ermittelt nach einem erfindungsgemäßen Verfahren zur Ermittlung der seitlichen Bandkontur kann festgestellt werden, welchen gegebenenfalls unerwünschte Bandkonturen aktuell auftreten. Entsprechend lassen sich gegebenenfalls Korrekturmaßnahmen wie Verstellung von Walzen im Walzgerüst oder Verschiebung der Position von Seitenführungen vornehmen. Beispielsweise ist der Abstand des Fühlelementes zu einem - beispielsweise dem in Laufrichtung nächsten -Stellglied, mit welchem die seitliche Bandkontur beeinflusst werden kann, bekannt - beispielsweise der Abstand zum Walzspalt des nächsten Walzgerüstes. Es kann dann bei bekannter Bandgeschwindigkeit berechnet werden, zu welchem Zeitpunkt eine Korrekturmaßnahme in dem Stellglied erfolgen sollte, und was für eine Korrekturmaßnahme erfolgen soll, um die festgestellte Abweichung von einer gewünschten seitlichen Bandkontur zu korrigieren.
Bei herkömmlichen Walzwerksanlagen besteht die Fertigstrasse aus 5-7 in Abständen zwischen 5-7 Meter angeordneten Walzgerüsten. Vor jedem Walzgerüst befindet sich als Seitenführung ein Bandeinlauflineal. Diese Bandeinlauflineale haben die Aufgabe den Bandanfang mittig in das Walzgerüst beziehungsweise dessen Walzspalt einzuführen. Werden gemäß einer erfindungsgemäßen Ausführung Fühlelemente in die Seitenführungen, beispielsweise in die verschiedenen Bandeinlauflineale, integriert, kann über mehrere Messpunkte über die sich erstreckende Bandlänge die Bandkontur vermessen werden. Nach einem ersten Fühlelement mit dem diesen Fühlelement nachfolgenden Walzgerüst getroffene Korrekturmaßnahme können auch unmittelbar nach diesem Walzgerüst mit einem weiteren Fühlelement überprüft werden. In der Folge kann gegebenenfalls mit einem zusätzlichen Korrekturschritt anhand der vom weiteren Fühlelements gemessenen Werte in einem folgenden Walzgerüst erneut zusätzlich korrigiert werden. Die Anzahl der möglichen Korrekturschritte ist beispielsweise abhängig von der Anzahl der Walzgerüste und der Anzahl der Fühlelemente beziehungsweise der Anzahl der mit Fühlelementen ausgestatteten Seitenführungen beziehungsweise Bandeinlauflinealen.
Grundsätzlich können auch Korrekturmaßnahmen vorgenommen werden, indem die Position von Seitenführungen verstellt wird.

Seitenführungen im Walzwerk können grundsätzlich beispielsweise so ausgeführt sein, wie in WO2015043926A1, deren Inhalt von der vorliegenden Anmeldung mit umfasst ist, gezeigt.

Ein weiterer Gegenstand der Anmeldung ist eine Vorrichtung zur Ermittlung der seitlichen Bandkontur zumindest eines Abschnittes eines über eine Metallband-Fördervorrichtung eines Walzwerkes, bevorzugt Warmwalzwerkes, laufenden Metallbandes,
dadurch gekennzeichnet, dass
zumindest ein Fühlelement zur Erhebung von zur Bestimmung der seitlichen Bandkontur geeigneten Messdaten vorhanden ist, das in Kontakt mit einer Seitenkante des laufenden Metallbandes gebracht werden kann.

Vorteilhaft ist es, wenn mehrere Fühlelement vorhanden sind. Dadurch kann das Metallband besser vermessen werden, weil gleichzeitig an mehreren Stellen des Metallbandes Messdaten erhoben werden können.

Vorzugsweise ist eine Apparatur zur Herstellung des Kontaktes zum Startzeitpunkt mit einer vorausgewählten
Startkontaktkraft vorhanden. Das kann beispielsweise mechanisch oder hydraulisch erfolgen, beispielsweise mit einem Federelement oder mit einem Hydrauliksystem beziehungsweise -zylinder.

Vorzugsweise ist das zumindest eine Fühlelement zur Wegmessung gegenüber einer Referenz geeignet.

Vorzugsweise ist das zumindest eine Fühlelement zur Messung von auf das Fühlelement ausgeübter Kraft geeignet.

Vorzugsweise ist das zumindest eine Fühlelement im Bereich der Seitenführungen der Metallband-Fördervorrichtung angeordnet. Seitenführungen dienen dazu, das Metallband durch Kontakt mit seinen Seitenkanten zu führen. Erfindungsgemäß ist im Bereich der Seitenführungen zumindest ein Fühlelement zur Erhebung von zur Bestimmung der seitlichen Bandkontur geeignete Messdaten vorhanden, das in Kontakt mit der Seitenkante eines laufenden Metallbandes gebracht werden kann.
Nach einer bevorzugten Ausführungsform ist das Fühlelement in einer Seitenführung integriert. Das erlaubt platzsparende Ausführung und wirtschaftlich vorteilhafte Nutzung von bereits für einen anderen Zweck vorhandenen Elementen der Seitenführung als Fühlelement.
Nach einer bevorzugten Variante umfasst die Seitenführung des Walzwerkes zumindest einen in einem Grundkörpermodul angeordneten Schleißkörper mit
Schleißkörperverstellvorrichtung, wobei der Schleißkörper mit Schleißkörperverstellvorrichtung als Fühlelement ausgeführt ist. Kontakt mit der Seitenkante des Metallbandes erfolgt mit der Schleißfläche des Schleißkörpers. Die Schleißkörperverstellvorrichtung ist beispielsweise geeignet zur Wegmessung gegenüber einer Referenz und/oder zur Messung von auf den Schleißkörper ausgeübter Kraft. Ein Schleißkörper mit Schleißkörperverstellvorrichtung kann als Fühlelement wirken, auch während die Führungsfunktion in der
Seitenführung wahrgenommen wird.

Die Ausführung mit Schleißkörper kann grundsätzlich beispielsweise so ausgeführt sein, wie in WO2015043926A1, deren Inhalt von der vorliegenden Anmeldung mit umfasst ist, gezeigt.

Vorzugsweise ist eine Apparatur zur Aufrechterhaltung der zum Startzeitpunkt vom Fühlelement eingenommene Position, solange die vom Metallband auf das Fühlelement ausgeübten Kraft oberhalb 0 und unterhalb eines Grenzwertes bleibt, vorhanden.

Nach einer bevorzugten Ausführungsform ist die Vorrichtung zur Ermittlung der seitlichen Bandkontur auch zur Übermittlung von erhobenen Messdaten und/oder der seitlichen Bandkontur an Steuer- und/oder Regeleinrichtungen für Walzgerüste und/oder für Seitenführungen des Walzwerkes geeignet.

### Kurze Beschreibung der Zeichnungen

Die Erfindung wird anhand schematischer beispielhafter Darstellungen von Ausführungsformen erläutert.
Figuren 1a, 1b, 1c zeigen schematisch, wie ein erfindungsgemäßen Verfahren zur Ermittlung der seitlichen Bandkontur eines Abschnittes eines über eine Metallband-Fördervorrichtung eines Walzwerkes laufenden Metallbandes eingesetzt wird.
Figuren 2a, 2b, 2c zeigen schematisch, wie Messdaten zu einem Säbel unter Aufrechterhaltung des Kontaktes zwischen Seitenkante und Fühlelement erhoben werden.
Figur 3 zeigt schematisch eine Ausführungsform eines Fühlelementes.
Figur 4 zeigt schematisch Integration von Fühlelementen in eine Seitenführung.

### Beschreibung der Ausführungsformen

### Beispiele

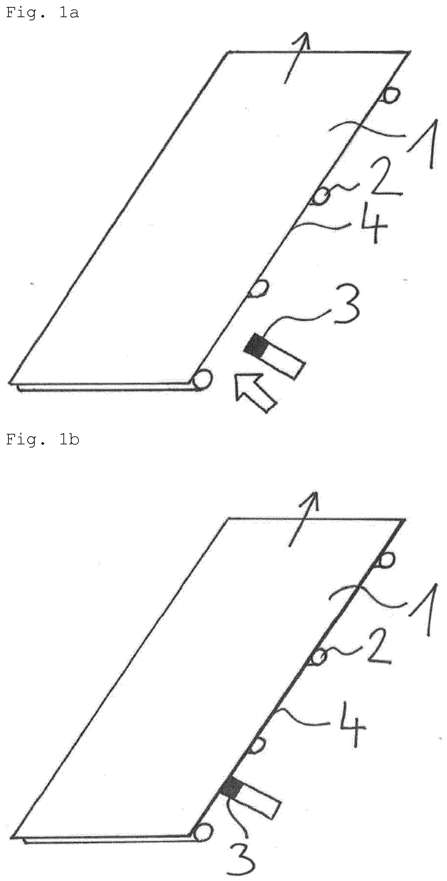

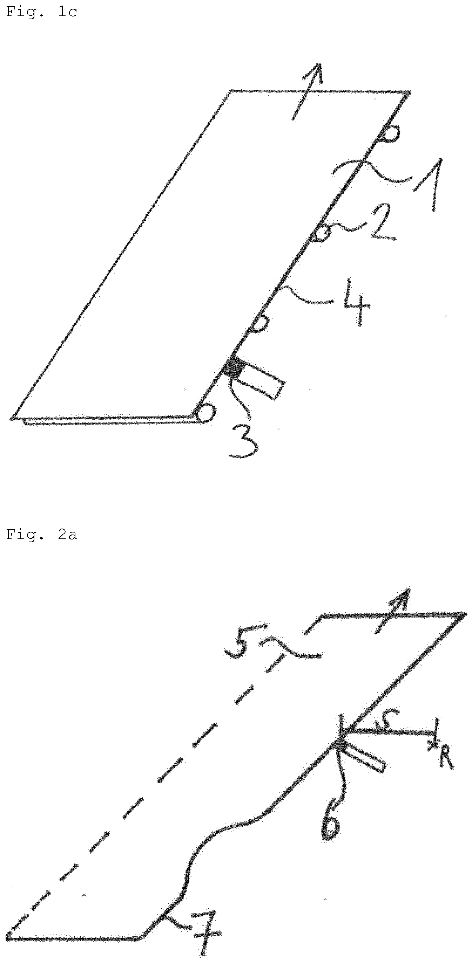

Die Figuren 1a, 1b, 1c zeigen schematisch, wie ein erfindungsgemäßen Verfahren zur Ermittlung der seitlichen Bandkontur eines Abschnittes eines über eine Metallband-Fördervorrichtung eines Walzwerkes laufenden Metallbandes eingesetzt wird.

In Figur 1a ist dargestellt, wie ein Metallband 1 über eine Metallband-Fördervorrichtung, hier einen Rollgang mit Rollgangsrollen 2, läuft. Die Laufrichtung ist mit einem Pfeil angedeutet. Ein Fühlelement 3 ist vorhanden, hat aber keinen Kontakt mit der Seitenkante 4 des Metallbandes 1. Durch einen Blockpfeil ist angedeutet, dass das Fühlelement in Richtung der Seitenkante 4 bewegt wird.
In Figur 1b ist der Startzeitpunkt des erfindungsgemäßen Verfahrens dargestellt. Kontakt zwischen Fühlelement 3 und Seitenkante 4 ist hergestellt. Es wird begonnen, zur Bestimmung der seitlichen Bandkontur geeignete Messdaten zu erheben, während der Abschnitt des Metallbandes an dem Fühlelement vorbei läuft, und der Kontakt bestehen bleibt, was in Figur 1c dargestellt ist.
Auf Basis erhobener Messdaten wird in der Folge die seitliche Bandkontur ermittelt.

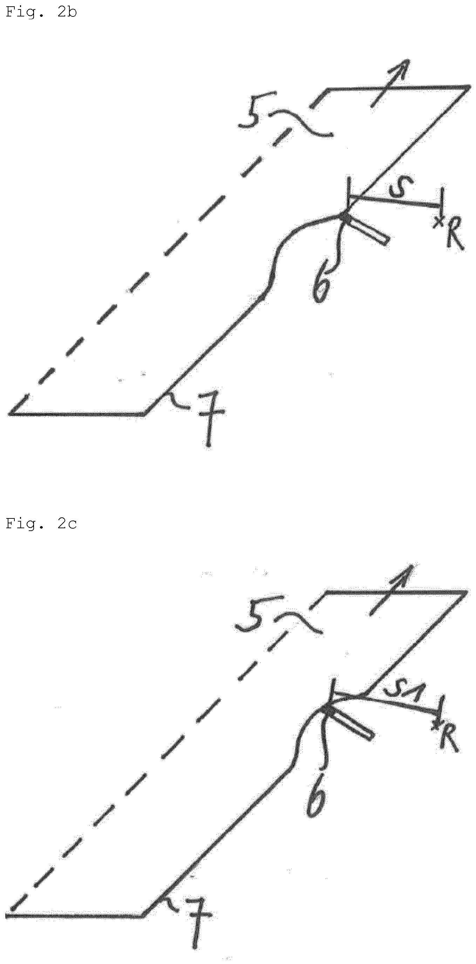

Figur 2a, 2b, 2c zeigen schematisch, wie ein Metallband 5 mit Säbel an einem Fühlelement 6, das Kontakt mit der Seitenkante 7 hat, vorbeiläuft. Die Laufrichtung ist mit einem Pfeil angedeutet. Dargestellt ist nur eine Seitenkante 7 des Metallbandes 5, welches nicht in seiner gesamten Breite dargestellt ist.
In Figur 2a ist der Abstand S des Fühlelementes 6 von einer Referenz R dargestellt. Eine Einbuchtung eines Säbels im Metallband 7 nähert sich dem Fühlelement 6. In Figur 2b erreicht die Einbuchtung das Fühlelement 6. Der Kontakt des Fühlelementes 6 mit der Seitenkante 7 wird aufrechterhalten, während das Metallband läuft. Um in der Einbuchtung den Kontakt aufrechtzuerhalten, wird wie in Figur 2c dargestellt das Fühlelement in die Einbuchtung bewegt. Der Abstand S1 zur Referenz R ist dementsprechend größer als der Abstand S. Bei einer säbelbedingten Ausbuchtung der Seitenkante würde der Abstand sich ebenfalls verändern, wenn das Fühlelement der Seitenkontur unter Aufrechterhaltung des Kontaktes folgend bewegt wird.

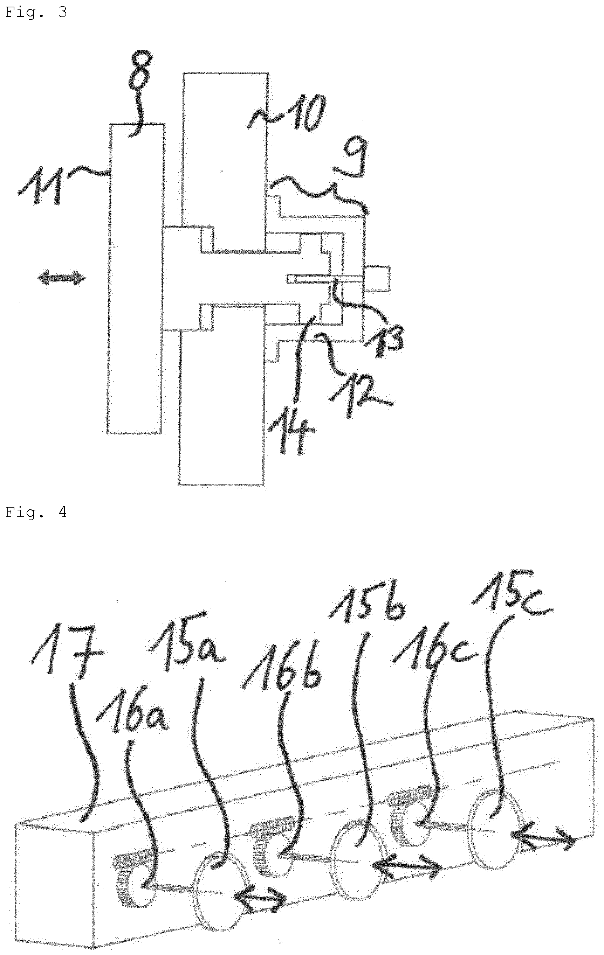

Figur 3 zeigt schematisch einen Schleißkörper 8 mit Schleißkörperverstellvorrichtung 9, wobei der Schleißkörper 8 mit Schleißkörperverstellvorrichtung 9 als Fühlelement ausgeführt ist und in einem Grundkörpermodul 10 einer Seitenführung eines Walzwerkes angeordnet werden kann. Kontakt mit einer Seitenkante eines Metallbandes erfolgt mit der Schleißfläche 11 des Schleißkörpers 8. Die Position des Schleißkörpers 8 kann mittels der
Schleißkörperverstellvorrichtung 9 verstellt werden, was mit einem Doppelpfeil angedeutet ist. Die
Schleißkörperverstellvorrichtung 9 umfasst einen Hydraulikzylinder 12, in dem ein Wegmesser 13 vorhanden ist, der beispielsweise Messdaten zu Änderungen der Position des Zylinderstempels 14 und damit des Schleißkörpers 8 erheben kann. Der Schleißkörper 8 oder die Schleißkörperverstellvorrichtung 9 können auch geeignet sein zur Messung von auf den Schleißkörper 8 ausgeübter Kraft, was zur besseren Übersichtlichkeit nicht extra dargestellt ist. Die Messdaten können erhoben werden, während der Schleißkörper in der Seitenführung seine Führungsaufgabe durch Kontakt mit der Seitenkante des Metallbandes erfüllt.

Figur 4 zeigt schematisch, wie als Fühlelement ausgeführte Schleißkörper 15a, 15b, 15 c mit Schleißkörperverstellvorrichtungen 16a,16b,16c in einer Seitenführung 17 integriert sind.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Metallband
- 2: Rollgangsrollen
- 3: Fühlelement
- 4: Seitenkante
- 5: Metallband
- 6: Fühlelement
- 7: Seitenkante
- 8: Schleißkörper
- 9: Schleißkörperverstellvorrichtung
- 10: Grundkörpermodul
- 11: Schleißfläche
- 12: Hydraulikzylinder
- 13: Wegmesser
- 14: Zylinderstempel
- 15a,15b,15c: Schleißkörper
- 16a,16b,16c: Schleißkörperverstellvorrichtung
- 17: Seitenführung

### Liste der Anführungen

Patentliteratur
WO2015043926A1

## Patentansprüche

1. Verfahren zur Ermittlung der seitlichen Bandkontur zumindest eines Abschnittes eines über eine Metallband-Fördervorrichtung eines Walzwerkes, bevorzugt Warmwalzwerkes, laufenden Metallbandes (1),
**dadurch gekennzeichnet, dass**
zu einem Startzeitpunkt zumindest ein Fühlelement (3) in Kontakt mit einer Seitenkante (4) des Metallbandes (1) gebracht wird,
und mittels des Fühlelementes (3) zur Bestimmung der seitlichen Bandkontur geeignete Messdaten erhoben werden, während der Abschnitt des Metallbandes (1) an dem Fühlelement (3) vorbei läuft.

2. Verfahren nach Anspruch 1, **dadurch gekennzeichnet, dass** die Messdaten den Abstand des Fühlelementes (3) von einer Referenz bei Kontakt mit der Seitenkante (4) des Metallbandes (1) betreffen.

3. Verfahren nach Anspruch 1 oder 2, **dadurch gekennzeichnet, dass** die Messdaten die vom Metallband (1) auf das Fühlelement (3) ausgeübte Kraft betreffen.

4. Verfahren nach Anspruch 3, **dadurch gekennzeichnet, dass** nach dem Startzeitpunkt, während der Abschnitt des Metallbandes (1) an dem Fühlelement (3) vorbei läuft, Messdaten der vom Metallband (1) auf das Fühlelement (3) ausgeübten Kraft erhoben werden, wobei die zum Startzeitpunkt vom Fühlelement (3) eingenommene Position aufrechterhalten wird, solange die vom Metallband (1) auf das Fühlelement (3) ausgeübten Kraft oberhalb 0 und unterhalb eines Grenzwertes bleibt.

5. Verfahren nach Anspruch 2, **dadurch gekennzeichnet, dass** der Kontakt zum Startzeitpunkt mit einer vorausgewählten Startkontaktkraft erfolgt, und nach dem Startzeitpunkt der Kontakt zwischen Seitenkante (4) und Fühlelement (3) mit Startkontaktkraft aufrechterhalten wird, während der Abschnitt des Metallbandes (1) an dem Fühlelement (3) vorbei läuft, und Messdaten von dazu notwendigen Änderungen des Abstandes zur Referenz erhoben werden.

6. Verfahren zur Korrektur des Bandlaufes eines über eine Metallband-Fördervorrichtung eines Walzwerkes, bevorzugt Warmwalzwerkes, laufenden Metallbandes (1), **dadurch gekennzeichnet, dass** auf Basis der nach einem Verfahren gemäß einem der Ansprüche 1 bis 5 zur Ermittlung der seitlichen Bandkontur erhobenen Messdaten und/oder auf Basis der ermittelten seitlichen Bandkontur Korrekturmaßnahmen an einem oder mehreren Walzgerüsten und/oder an einer oder an mehreren Seitenführungen des Walzwerkes vorgenommen werden.

7. Verfahren nach Anspruch 6, **dadurch gekennzeichnet, dass** eine Regelung der Korrekturmaßnahmen an Walzgerüsten und/oder an Seitenführungen auf Basis der erfindungsgemäß erhobenen Messdaten und/oder der erfindungsgemäß ermittelten seitlichen Bandkontur erfolgt.

8. Vorrichtung zur Ermittlung der seitlichen Bandkontur zumindest eines Abschnittes eines über eine Metallband-Fördervorrichtung eines Walzwerkes, bevorzugt Warmwalzwerkes, laufenden Metallbandes (1),
**dadurch gekennzeichnet, dass**
zumindest ein Fühlelement (3) zur Erhebung von zur Bestimmung der seitlichen Bandkontur geeigneten Messdaten vorhanden ist, das in Kontakt mit einer Seitenkante (4) des laufenden Metallbandes (1) gebracht werden kann.

9. Vorrichtung nach Anspruch 8, **dadurch gekennzeichnet, dass** eine Apparatur zur Herstellung des Kontaktes zum Startzeitpunkt mit einer vorausgewählten Startkontaktkraft vorhanden ist.

10. Vorrichtung nach Anspruch 8 oder 9, **dadurch gekennzeichnet, dass** das zumindest eine Fühlelement (3) zur Wegmessung gegenüber einer Referenz geeignet ist.

11. Vorrichtung nach einem der Ansprüche 8 bis 10, **dadurch gekennzeichnet, dass** das zumindest eine Fühlelement (3) zur Messung von auf das Fühlelement ausgeübter Kraft geeignet ist.

12. Vorrichtung nach einem der Ansprüche 8 bis 11, **dadurch gekennzeichnet, dass** das zumindest eine Fühlelement (3) im Bereich der Seitenführungen (17) der Metallband-Fördervorrichtung angeordnet, vorzugsweise in einer Seitenführung (17) integriert, ist.

13. Vorrichtung nach Anspruch 12, **dadurch gekennzeichnet, dass** die Seitenführung (17) des Walzwerkes zumindest einen in einem Grundkörpermodul angeordneten Schleißkörper (8) mit Schleißkörperverstellvorrichtung (9) umfasst, wobei der Schleißkörper(8) mit Schleißkörperverstellvorrichtung (9) als Fühlelement ausgeführt ist.

14. Vorrichtung nach einem der Ansprüche 8 bis 13, **dadurch gekennzeichnet, dass** eine Apparatur zur Aufrechterhaltung der zum Startzeitpunkt vom Fühlelement (3) eingenommene Position, solange die vom Metallband auf das Fühlelement ausgeübten Kraft oberhalb 0 und unterhalb eines Grenzwertes bleibt, vorhanden ist.

15. Vorrichtung nach einem der Ansprüche 8 bis 14, **dadurch gekennzeichnet, dass** die Vorrichtung zur Ermittlung der seitlichen Bandkontur auch zur Übermittlung von erhobenen Messdaten und/oder der seitlichen Bandkontur an Steuer- und/oder Regeleinrichtungen für Walzgerüste und/oder für Seitenführungen des Walzwerkes geeignet ist.
